# EUROPÄISCHE PATENTSCHRIFT

(11) **EP 3 088 122 B1**
(45) Veröffentlichungstag und Bekanntmachung des Hinweises auf die Patenterteilung: **11.04.2018**
(21) Anmeldenummer: 16156421.6
(22) Anmeldetag: 19.02.2016
(51) Int. Cl.: B23K 26/00, B23K 26/354, C22B 9/22, B23K 26/08, F01D 5/00, B23P 6/00

(54) **REPARATUR VON EINKRISTALLINEN STRÖMUNGSKANALSEGMENTEN MITTELS EINKRISTALLINEM UMSCHMELZEN**
REPARATION OF SINGLE CRYSTAL FLOW CHANNEL SEGMENTS USING SINGLE CRYSTAL REMELTING
REPARATION DE SEGMENTS DE CONDUIT D'ECOULEMENT MONOCRISTALLINS A L'AIDE DE REFONTE MONOCRISTALLINE

(30) Priorität: 21.04.2015 DE 102015207212
(43) Veröffentlichungstag der Anmeldung: 02.11.2016
(73) Patentinhaber: MTU Aero Engines AG, 80995 München (DE)
(72) Erfinder: Schulze, Uwe, 29308 Winsen (DE); Partes, Knut, Verden 27283 (DE)

(56) Entgegenhaltungen:
- EP-A1- 0 892 090
- EP-A1- 2 783 789
- EP-A2- 2 107 370
- US-A1- 2009 175 727

## Beschreibung

### HINTERGRUND DER ERFINDUNG

### GEBIET DER ERFINDUNG

Die vorliegende Erfindung betrifft ein Verfahren zur Reparatur von Strömungskanalsegmenten von Strömungsmaschinen und insbesondere von Flugtriebwerken.

### STAND DER TECHNIK

Bei Strömungsmaschinen und insbesondere Flugtriebwerken werden für verschiedene Bauteile in den temperaturbelasteten Bereichen einkristalline oder gerichtet erstarrte Bauteile verwendet, wobei durch die einkristalline Struktur oder die gerichtet erstarrte Struktur diese Bauteile eine höhere Festigkeit und insbesondere verbesserte Hochtemperaturfestigkeit aufweisen, sodass die Bauteile entsprechend kleiner dimensioniert werden können, was Material und Gewichtseinsparung zur Folge hat, und/oder die Strömungsmaschinen können bei höheren Temperaturen betrieben werden, was zur Effizienzsteigerung beiträgt.

Allerdings sind einkristalline Bauteile sehr teuer in der Herstellung, sodass versucht werden muss, eine möglichst lange Lebensdauer zu erreichen, was jedoch bei den gegebenen Betriebsbedingungen mit hohen Temperaturen, hohen mechanischen Belastungen, aggressiven Medien, Temperaturwechseln und dergleichen schwierig zu realisieren ist. Entsprechend treten bei derartigen Bauteilen häufig Schädigungen durch Rissbildung oder ähnliches auf, sodass die Bauteile ausgetauscht oder repariert werden müssen. Entsprechend sind für bestimmte Bauteile, wie Turbinenschaufeln oder andere Gussteile bereits Reparaturverfahren entwickelt worden, die es ermöglichen Gussfehler oder im Betrieb eingebrachte Beschädigungen zu beseitigen. Ein Beispiel für ein solches Reparaturverfahren ist beispielsweise in der Patentanmeldung US 2009/0175727 A1 angegeben. In diesem Zusammenhang ist es ferner bekannt einkristalline oder gerichtet erstarrte Bauteile einkristallin umzuschmelzen. Das bedeutet, dass der beschädigte Bereich aufgeschmolzen und entsprechend der einkristallinen oder gerichtet erstarrten Struktur des Bauteils epitaktisch erstarrt wird. Beispiele hierfür sind in der EP 2 047 940 A1, der EP 1 340 567 A1, der WO 2009/047024 A1 und der WO 2009/046735 A1 beschrieben. Das einkristalline Umschmelzen an sich ist in der Dissertation von B. Burbaum "Verfahrenstechnische Grundlagen für das Laserstrahl-Umschmelzen einkristalliner Nickelbasis-Superlegierungen", Dissertation an der RWTH Aachen, 2010 beschrieben.

Die dort beschriebenen Reparaturverfahren für einkristalline Bauteile betreffen jedoch Strukturbauteile wie Turbinenschaufeln, die lediglich in eng begrenzten Bereich repariert werden müssen.

Allerdings gibt es in Strömungsmaschinen, wie Flugtriebwerken weitere Bauteile, die ebenfalls einkristallin ausgebildet werden, wie beispielsweise Strömungskanalsegmente, insbesondere Dichtsegmente, sogenannte Shrouds, die um den Strömungskanal herum angeordnet sind und diesen begrenzen. Entsprechende Dichtsegmente können zusätzlich Dichtflächen aufweisen, an denen die Schaufelspitzen der rotierenden Turbinenschaufeln anschleifen.

Derartige Strömungskanalsegmente sind ebenfalls hohen Belastungen durch hohe und wechselnde Temperaturen sowie entsprechende mechanische Belastungen durch hohe Druckbelastung und Druckwechselbeanspruchungen ausgesetzt. Entsprechend treten auch bei diesen Bauteilen Beschädigungen, wie beispielsweise Oberflächenrisse und dergleichen auf, die zu einem Totalversagen des Bauteils führen können. Um dies zu vermeiden werden die Strömungskanalsegmente von Zeit zu Zeit überprüft und aufgearbeitet.

Werden bei einer Überprüfung beispielsweise Oberflächenrisse festgestellt, so werden diese Oberflächenrisse üblicherweise durch Abtragen der betroffenen Oberflächenschicht entfernt, um eine Rissausbreitung zu vermeiden. Sofern ein entsprechend aufbereitetes Strömungskanalsegment eine Mindestbauteildicke nicht unterschreitet, kann es wieder verwendet werden, während ansonsten die Strömungskanalsegmente ausgetauscht werden müssen. Dadurch entsteht insbesondere bei einkristallin ausgebildeten Strömungskanalsegmenten ein hoher Wartungsaufwand.

### OFFENBARUNG DER ERFINDUNG

### AUFGABE DER ERFINDUNG

Es ist deshalb Aufgabe der vorliegenden Erfindung ein Verfahren zur Reparatur von einkristallinen oder gerichtet erstarrten Strömungskanalsegmenten von Strömungsmaschinen und insbesondere Flugtriebwerken bereitzustellen, welches den Wartungsaufwand und die Betriebskosten für entsprechende Strömungsmaschinen reduziert, indem die Lebensdauer von einkristallinen oder gerichtet erstarrten Strömungskanalsegmenten verlängert wird. Dabei soll das entsprechende Verfahren einfach und effizient durchführbar sein und die reparierten Strömungskanalsegmente sollen das erforderliche Eigenschaftsprofil in möglichst uneingeschränktem Maße aufweisen.

### TECHNISCHE LÖSUNG

Diese Aufgabe wird gelöst durch ein Verfahren mit den Merkmalen des Anspruchs 1. Vorteilhafte Ausgestaltungen sind Gegenstand der abhängigen Ansprüche.

Die vorliegende Erfindung schlägt vor zur Reparatur von Strömungskanalsegmenten das einkristalline Umschmelzen auch auf flächige Bauteile wie die Strömungskanalsegmente anzuwenden und größere Teile der Oberflächen der Strömungskanalsegmente umzuschmelzen. Es hat sich überraschend gezeigt, dass auch für die Reparatur von größeren Flächen bei dünnwandigen Bauteilen ein einkristallines Umschmelzen möglich ist, sodass nach dem Umschmelzen Fehlstellen, wie Risse, entfernt sind und das umgeschmolzene Bauteil wiederum eine einheitliche Struktur aus einkristallinem oder gerichtet erstarrtem Material aufweist, sodass das Eigenschaftsprofil des einkristallinen oder gerichtet erstarrten Bauteils weiterhin vollumfänglich gewährleistet ist.

Im Einzelnen umfasst somit das erfindungsgemäße Verfahren zur Reparatur von Strömungskanalsegmenten einer Strömungsmaschine und insbesondere eines Flugtriebwerks die Schritte des Bereitstellens eines einkristallinen oder gerichtet erstarrten Strömungskanalsegments, das Reinigen der zu überarbeitenden Fläche, nämlich insbesondere der Begrenzungsfläche des Strömungskanals, das Umschmelzen zumindest eines Teils dieser Begrenzungsfläche in einem Oberflächenbereich und das Entfernen eines Randbereichs an der Oberfläche des umgeschmolzenen Strömungskanalsegments, welcher polykristallin erstarrt ist.

Zwischen dem Umschmelzen und dem Entfernen des Randbereichs kann eine Wärmebehandlung des Strömungskanalsegments zum Einstellen des Gefüges erfolgen.

Bei den zur Reparatur vorgesehenen Strömungskanalsegmenten ist charakteristisch, dass diese eine sehr viel größere Länge und Breite im Vergleich zur Dicke aufweisen und somit ein flächiges Bauteil darstellen, welches gegenüber Verzug beim Umschmelzen anfällig ist. Insbesondere kann die Dicke nur einen Bruchteil der Länge oder Breite des Strömungskanalsegments aufweisen, wobei das Verhältnis von Dicke zu Länge oder Breite beispielsweise im Bereich von 1/10 bis 1/30 liegen kann.

Das bereitgestellte Strömungskanalsegment kann Verunreinigungen einschließlich abgeschiedener Oxide aufweisen, die vor dem Umschmelzen entfernt werden sollen, um ein Einbringen der Verunreinigung oder Oxide in das umgeschmolzene Material zu vermeiden.

Das Reinigen der Oberfläche kann durch verschiedene Verfahren durchgeführt werden, die auch miteinander kombiniert werden können. Beispielsweise können die Methoden zur Reinigung der Oberfläche eine thermische Reinigung, eine mechanische Reinigung, eine chemische Reinigung sowie das Spülen mit Flüssigkeit und/oder mit einem Gasstrom und die Reinigung in bestimmten Atmosphären, wie beispielsweise die Fluorid - Ionen - Reinigung, sowie entsprechende Kombinationen daraus umfassen. Insbesondere kann die Reinigung so erfolgen, dass an der Oberfläche und insbesondere an Rissflanken vorliegende Oxide entfernt werden.

Das einkristalline Umschmelzen, bei dem das aufgeschmolzene Material anschließend wiederum einkristallin oder gerichtet erstarrt in epitaktischer Weise auf dem nicht aufgeschmolzenen Material gebildet wird, kann mittels eines hochenergetischen Strahls, wie beispielsweise eines Lasers erfolgen, der relativ zu dem aufzuschmelzenden Teil der aufzuschmelzenden Oberfläche bewegt wird. Die relative Bewegung zwischen aufzuschmelzender Oberfläche und hochenergetischem Strahl kann in Form eines Bewegungsmusters erfolgen, welches beispielsweise eine kontinuierliche mäanderförmige Bewegung, eine wiederholte, insbesondere eine wiederholte, parallel lineare Bewegung in gleicher oder entgegengesetzten Richtungen oder eine schneckenförmige Bewegung umfassen kann.

Bei dem erfindungsgemäßen Verfahren können insbesondere große Flächen des Strömungskanalsegments repariert werden, und zwar insbesondere die Begrenzungsfläche, die in Richtung des Strömungskanals ausgebildet ist, also in Kontakt mit dem Strömungsfluid kommt. Insbesondere kann der überwiegende Teil, also mehr oder gleich 50% der Begrenzungsfläche eines Strömungskanalsegments, insbesondere mehr als 60% der Begrenzungsfläche, vorzugsweise mehr als 75% und höchst vorzugsweise mehr als 90% der Begrenzungsfläche des Strömungskanalsegments umgeschmolzen werden.

Das Umschmelzen kann in einem Oberflächenbereich bis zu einer definierten Tiefe, d.h. einer bestimmten Dimension in Dickenrichtung des Strömungskanalsegments erfolgen, in welcher Schädigungen, wie beispielsweise Risse vorliegen.

Der aufgeschmolzene Oberflächenbereich kann sich in Richtung der Dicke des Strömungskanalsegments über kleiner oder gleich 20% der Dicke des Strömungskanalsegments, insbesondere kleiner oder gleich 10%, vorzugsweise kleiner oder gleich 5% der Dicke des Strömungskanalsegments erstrecken, wobei mindestens ein aufgeschmolzener Oberflächenbereich in der Größenordnung von 1 % der Dicke des Strömungskanalsegments, insbesondere mindestens 5% und vorzugsweise mindestens 10% der Dicke des Strömungskanalsegments aufgeschmolzen werden können.

Beim einkristallinen Umschmelzen wird lediglich ein Teil des aufgeschmolzenen Oberflächenbereichs in Dickenrichtung einkristallin oder gerichtet erstarren, während ein äußerer Oberflächenbereich polykristallin erstarren wird. Ein derartiger äußerer Oberflächenbereich, der als Randbereich bezeichnet wird, kann sich in Dickenrichtung über 1 bis 20% des aufgeschmolzenen Oberflächenbereichs, insbesondere 5 bis 10% des aufgeschmolzenen Oberflächenbereichs erstrecken. Der Randbereich wird nach einer nach dem Umschmelzen durchgeführten Wärmebehandlung des Strömungskanalsegments zur Einstellung des Gefüges entfernt, sodass nach dem Entfernen des Randbereichs das Strömungskanalsegment in Dickenrichtung vorzugsweise ausschließlich einkristallin oder gerichtet erstarrt ausgebildet ist.

Die Entfernung des Randbereichs kann mechanisch und/oder chemisch einschließlich elektrochemischer Bearbeitung erfolgen.

Bei dem erfindungsgemäßen Verfahren kann vor dem Umschmelzen und insbesondere vor dem Reinigen eine eventuell auf dem Strömungskanalsegment vorhandene Beschichtung, wie beispielsweise ein Einlaufbelag oder eine Wärmedämmschicht entfernt werden, wobei die Entfernung ebenfalls durch mechanische und/oder chemische Behandlung erfolgen kann.

Nach der Reinigung des Strömungskanalsegments kann dieses auf Beschädigungen untersucht werden, um festzustellen, wo zu beseitigende Beschädigungen vorliegen, um dann gezielt die geschädigten Bereiche reparieren zu können. Zur Untersuchung können alle geeigneten Verfahren eingesetzt werden, wobei sich insbesondere die Farbeindringprüfung bewährt hat, da damit Risse sichtbar gemacht werden können.

Mit dem erfindungsgemäßen Verfahren kann die Lebensdauer von Strömungskanalsegmenten deutlich erhöht werden, da lediglich ein geringer Materialverlust durch die Entfernung des Randbereichs stattfindet, der im Gegensatz zu den bisherigen Verfahren im Stand der Technik, bei dem der beschädigte Bereich komplette entfernt worden ist, einen sehr viel geringerem Materialverlust darstellt. Dadurch kann das erfindungsgemäße Reparaturverfahren auch wiederholt bei einem Strömungskanalsegment während seiner gesamten Lebensdauer durchgeführt werden und die Lebensdauer kann insgesamt signifikant erhöht werden. Insbesondere kann bei Strömungskanalsegmenten, die einen gewissen Dickenbereich zur Reparatur von Beschädigungen aufweisen, eine Reparatur sehr viel häufiger durchgeführt werden. Die erfindungsgemäße Reparatur kann solange wiederholt durchgeführt werden, solange das Strömungskanalsegment nach Entfernung des Randbereichs mit seiner Dicke eine Mindestdicke nicht unterschreitet.

### KURZBESCHREIBUNG DER FIGUREN

Die beigefügten Zeichnungen zeigen in rein schematischer Weise in
- Fig. 1: eine perspektivische Darstellung eines Strömungskanalsegments als Teil eines Strömungskanals,
- Fig. 2: einen teilweisen Querschnitt durch das Strömungskanalsegment aus Figur 1 nach einer gewissen Zeit im Betrieb,
- Fig. 3: einen teilweisen Querschnitt des Strömungskanalsegments gemäß Figur 2 nach dem Reinigungsschritt,
- Fig. 4: einen teilweisen Querschnitt des Strömungskanalsegments aus den Figuren 2 und 3 nach dem Umschmelzen,
- Fig. 5: einen teilweisen Querschnitt des Strömungskanalsegments aus den Figuren 2 bis 4 nach dem Entfernen des Randbereichs,
- Fig. 6: ein Ablaufdiagramm eines Reparaturverfahrens gemäß der vorliegenden Erfindung und in
- Fig. 7: eine Draufsicht auf ein Strömungskanalsegment mit der Darstellung eines Teils der zu reparierenden Begrenzungsfläche des Strömungskanalsegments mit Anzeige der Bewegungsbahn des Laserstrahls.

### AUSFÜHRUNGSBEISPIELE

Weitere Vorteile, Kennzeichen und Merkmale der vorliegenden Erfindung werden bei der nachfolgenden detaillierten Beschreibung der Ausführungsbeispiele deutlich. Allerdings ist die Erfindung nicht auf diese Ausführungsbeispiele beschränkt.

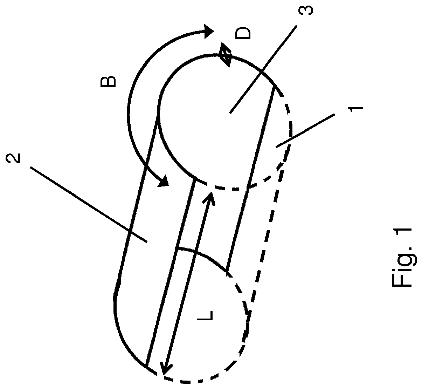

Die Figur 1 zeigt eine perspektivische Darstellung eines Strömungskanalsegments 2 in rein schematischer Weise. Das Strömungskanalsegment 2 umgibt teilweise einen Strömungskanal 1, der ergänzend in gestrichelter Darstellung gezeigt ist. Mehrere Strömungskanalsegmente 2 können den Strömungskanal 1 vollständig umgeben. Das Strömungskanalsegment 2 ist in der gezeigten Darstellung als Segment einer Zylindermantelfläche dargestellt, wobei dies lediglich eine schematische Darstellung ist. Entsprechende Strömungskanalsegmente 2 können in beliebiger Form ausgebildet sein, wobei die Grundstruktur mit einer großen Länge L und einer großen Breite B gegenüber einer geringen Dicke D allgemein gültig für verschiedenste Strömungskanalsegmente 2 zutrifft. Die Dicke D kann beispielsweise im Bereich von einigen Millimeter liegen, während die Länge L und die Breite B sich im Bereich von einigen Zentimetern bis zu Metern erstrecken können.

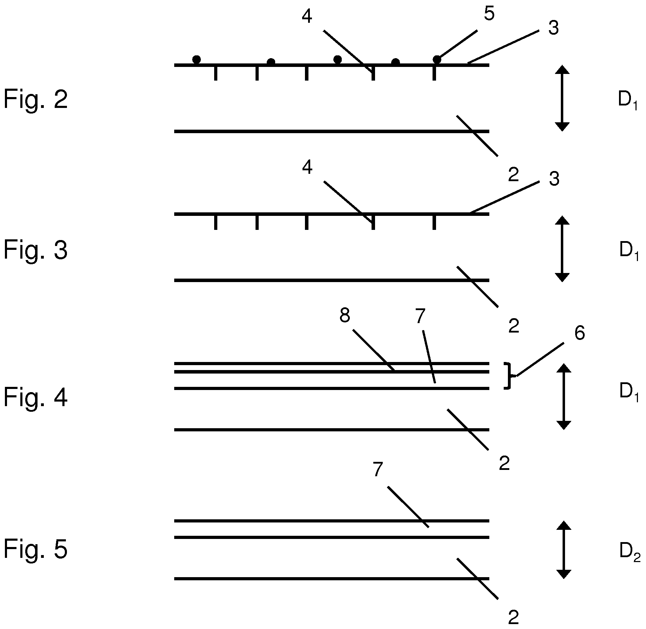

Die Figur 2 zeigt einen teilweisen Querschnitt durch das Strömungskanalsegment 2, sodass die Dickendimension D, die hier mit D₁ angegeben ist, deutlich wird.

Auf dem Strömungskanalsegment 2 bzw. der den Strömungskanal begrenzenden Begrenzungsfläche 3 sind durch den Betrieb und die damit verbundenen hohen Temperaturbelastungen und mechanischen Belastungen Risse 4 entstanden, die sich von der Oberfläche in das Materialinnere erstrecken. Zusätzlich ist in der Figur 2 dargestellt, dass die Begrenzungsfläche 3 mit Verunreinigungen 5 belastet sein kann.

Gemäß dem erfindungsgemäßen Reparaturverfahren wird das Strömungskanalsegment 2 und insbesondere die Begrenzungsfläche 3 einer Reinigung unterzogen, bei der die Verunreinigungen 5 entfernt werden. Die Reinigung kann beispielsweise durch ein Fluorid - Ionen - Glühen erfolgen, bei welchem das Strömungskanalsegment 2 in einer Fluorid - Ionen - Atmosphäre bei einer bestimmten Temperatur geglüht wird, sodass das enthaltene Fluorgas mit auf der Begrenzungsfläche 3 abgeschiedenen Oxiden reagieren können, wobei sich die Reaktionsprodukte verflüchtigen und so eine Reinigung der Begrenzungsfläche 5 bewirkt wird.

Die Figur 4 zeigt einen teilweisen Querschnitt durch das Strömungskanalsegment 2 aus den Figuren 2 und 3 nach dem Umschmelzen eines Oberflächenbereichs 6 des Strömungskanalsegments 2. Das Umschmelzen kann beispielsweise durch einen Laserstrahl erfolgen, wobei mit der Strahlenergie das Material bis in eine bestimmte Tiefe aufgeschmolzen und dann derart abgekühlt wird, dass ein epitaktisches Aufwachsen des Materials auf dem einkristallinen oder gerichtet erstarrten Grundmaterial des Strömungskanalsegments 2 erfolgt. Die Dicke des Strömungskanalsegments 2 ist nach dem Umschmelzen immer noch D₁, da bisher kein nennenswerter Materialverlust aufgetreten ist. Allerdings sind durch das Aufschmelzen des Oberflächenbereichs 6 die Risse 4 entfernt worden.

Allerdings erfolgt das epitaktische Aufwachsen mit einer einkristallinen oder gerichteten Erstarrung nicht über die gesamte Dicke D₁ des aufgeschmolzenen Oberflächenbereichs 6 sondem lediglich über einen Teil davon, nämlich im sogenannten Strukturbereich 7, der sich an das nicht aufgeschmolzene Material des Strömungskanalsegments 2 anschließt. An der Au-ßenseite können die Erstarrungsbedingungen nicht so aufrecht erhalten werden, dass ebenfalls eine epitaktische und somit einkristalline bzw. gerichtete Erstarrung möglich ist, sodass sich ein polykristalliner Randbereich 8 ausbildet, der sich über den äußeren Teil des aufgeschmolzenen Oberflächenbereichs 6 erstreckt.

Die Figur 5 zeigt in einem teilweisen Querschnitt das Strömungskanalsegment 2 nach dem Entfernen des Randbereichs 8. Um eine durchgehend einkristalline bzw. gerichtet erstarrte Struktur des Strömungskanalsegments 2 in Dickenrichtung zu erreichen, wird der polykristalline Randbereich 8 mittels mechanischer Bearbeitung, z. B. Schleifen oder dergleichen, bzw. chemischer Bearbeitung, z. B. entsprechendes Ätzen, entfernt, sodass nur der einkristalline oder gerichtet erstarrte Strukturbereich 7 des aufgeschmolzenen Oberflächenbereichs 6 verbleibt.

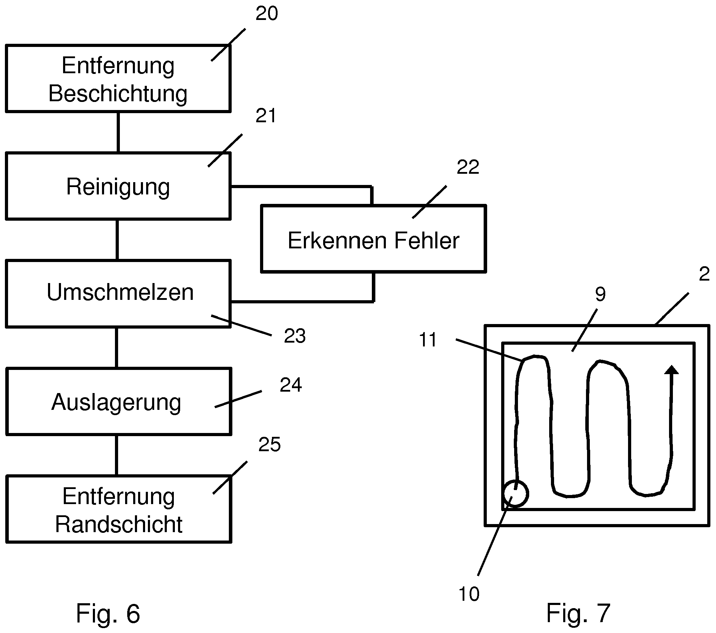

Die Figur 6 zeigt in einem Ablaufdiagramm die verschiedenen Verfahrensschritte einer Ausführungsform des erfindungsgemäßen Verfahrens, die zu den verschiedenen Stadien des Strömungskanalsegments 2, die in den Figuren 2 bis 5 dargestellt worden sind, führen. Allerdings ist im Ablaufdiagramm der Figur 6 ein weiterer Schritt genannt, der nicht in den Figuren 2 bis 5 dargestellt worden ist, nämlich das Entfernen einer möglicherweise auf dem Strömungskanalsegment 2 bzw. der Begrenzungsfläche 3 vorgesehenen Beschichtung, wie beispielsweise einer Wärmedämmschicht oder eines Einlaufbelags oder dergleichen. Eine derartige Beschichtung kann vor oder während der Reinigung entfernt werden (Schritt 20), und zwar ebenfalls auf mechanische und/oder chemische Weise, also beispielsweise durch Schleifen, Polieren und/oder Ätzen. Nach dem Entfernen einer möglichen Beschichtung kann dann der Reinigungsschritt 21 zur Entfernung von Verunreinigungen erfolgen.

Nach dem Reinigungsschritt 21 kann sofort das Umschmelzen 23 erfolgen oder es kann ein Zwischenschritt 22 zum Erkennen bzw. Erfassen der Beschädigung der Begrenzungsfläche 3 durchgeführt werden. Sofern nahezu die gesamte Begrenzungsfläche 3 umgeschmolzen wird, kann auf den Erkennungsschritt 22 verzichtet werden. Sollen jedoch nur bestimmte Bereiche der Begrenzungsfläche 3 repariert werden, so kann mittels des Erkennungsschritts 22 festgestellt werden, in welchen Teilen der Begrenzungsfläche 3 ein Umschmelzen erforderlich ist.

Nach dem Schritt des Umschmelzens 23 schließt sich ein Wärmebehandlungsschritt 24 an, bei dem das gesamte Strömungskanalsegment einer Wärmebehandlung unterzogen wird, mit der das Gefüge des Strömungskanalsegments in der gewünschten Weise eingestellt wird, um die Einflüsse des Umschmelzens zu beseitigen. Die Wärmebehandlung erfolgt natürlich unterhalb der Schmelztemperatur, um eine Zerstörung der Einkristallstruktur oder gerichtet erstarrten Struktur zu vermeiden.

Nach der Wärmebehandlung wird der Randbereich 8 im Entfernungsschritt 25 entfernt sodass anschließend ein Strömungskanalsegment vorliegt, welches über der gesamten Dicke eine einkristalline oder gerichtet erstarrte Struktur aufweist.

Die Figur 7 zeigt in einer Draufsicht ein Teil eines Strömungskanalsegments 2 mit einem Bearbeitungsbereich 9, der durch Umschmelzen repariert werden soll. Das Umschmelzen erfolgt mittels eines Laserstrahls, dessen Auftrefffläche 10 auf den Umschmelzbereich 9 ebenfalls in Figur 7 dargestellt ist. Die Auftrefffläche 10 des Laserstrahls wird gemäß der Bewegungsbahn 11 relativ zur Oberfläche des Strömungskanalsegments 2 bewegt, sodass der ganze Bearbeitungsbereich 9 der Begrenzungsfläche des Strömungskanalsegments, der aufgeschmolzen werden soll, von der Auftrefffläche 10 des Laserstrahls überstrichen wird. Bei dem Ausführungsbeispiel der Figur 7 ist einer mäanderförmige Bewegungsbahn 11 gezeigt, bei der die Auftrefffläche 10 kontinuierlich über den gesamten Bearbeitungsbereich 9 geführt wird. Allerdings ist es auch möglich den Laserstrahl in einer anderen Art und Weise zu führen, beispielsweise durch eine wiederholte, parallele lineare Führung des Strahls oder dergleichen. Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird.

## Patentansprüche

1. Verfahren zur Reparatur von Strömungskanalsegmenten einer Strömungsmaschine, insbesondere eines Flugtriebwerks, welches die folgenden Schritte umfasst:
a. Bereitstellen eines einkristallinen oder gerichtet erstarrten Strömungskanalsegments (2), welches eine Länge, eine Breite und eine Dicke aufweist, wobei sich die Länge und Breite entlang des Strömungskanals erstrecken und jeweils größer als die Dicke sind, und wobei die Breite und Länge eine Fläche begrenzen, die eine Begrenzungsfläche (3) eines Strömungskanals darstellt und Beschädigungen aus dem Betrieb aufweist,
b. Reinigen der Begrenzungsfläche (3), um Verunreinigungen zu entfernen, **dadurch gekennzeichnet, dass** das Verfahren ferner die folgenden Schritte umfasst:
c. Umschmelzen zumindest eines Teils der Begrenzungsfläche (3) in einem Oberflächenbereich derart, dass aufgeschmolzenes Material in einem inneren, dem nicht aufgeschmolzenen Material zugewandten Bereich (7) epitaktisch erstarrt und einen Strukturbereich (7) bildet, in dem die einkristalline oder gerichtet erstarrte Struktur erhalten bleibt, und dass aufgeschmolzenes Material in einem äußeren, dem Strömungskanal zugewandten Bereich (8) polykristallin erstarrt, der einen Randbereich bildet,
d. Entfernen des Randbereichs (8).

2. Verfahren nach Anspruch 1,
**dadurch gekennzeichnet, dass**
zwischen den Verfahrensschritten c) und d) eine Wärmebehandlung des Strömungskanalsegments (2) zur Einstellung des Gefüges erfolgt.

3. Verfahren nach Anspruch 1 oder 2,
**dadurch gekennzeichnet, dass**
das Verfahren einen Untersuchungsschritt (22) zur Erkennung der Beschädigungen umfasst.

4. Verfahren nach Anspruch 3,
**dadurch gekennzeichnet, dass**
im Untersuchungsschritt (22) eine Farbeindringprüfung durchgeführt wird.

5. Verfahren nach einem der vorhergehenden Ansprüche,
**dadurch gekennzeichnet, dass**
die Reinigung (21) der Oberfläche mindestens eine Methode aus der Gruppe umfasst, die thermische Reinigung, mechanische Reinigung, chemische Reinigung, Spülen mit einer Flüssigkeit oder einem Gasstrom, Fluorid - Ionen - Reinigung und Kombinationen daraus umfasst.

6. Verfahren nach einem der vorhergehenden Ansprüche,
**dadurch gekennzeichnet, dass**
der überwiegende Teil der Begrenzungsfläche (3), insbesondere mehr als 60 % der Begrenzungsfläche, vorzugsweise mehr als 75 % der Begrenzungsfläche, höchst vorzugsweise mehr als 90 % der Begrenzungsfläche umgeschmolzen wird.

7. Verfahren nach einem der vorhergehenden Ansprüche,
**dadurch gekennzeichnet, dass**
das Umschmelzen mit einem hochenergetischen Strahl, insbesondere einem Laserstrahl durchgeführt wird, der mit seiner auf dem aufzuschmelzenden Teil (9) der Begrenzungsfläche (3) auftreffenden Strahlfläche (10) relativ zu dem aufzuschmelzenden Teil der Begrenzungsfläche bewegt wird, wobei ein dadurch erzeugtes Bewegungsmuster (11) der Strahlfläche eine kontinuierliche mäanderförmige Bewegung, ein wiederholte, parallele, lineare Bewegung in gleicher oder entgegengesetzter, insbesondere abwechselnd entgegen gesetzter Richtung, oder eine schneckenförmige Bewegung umfasst.

8. Verfahren nach einem der vorhergehenden Ansprüche,
**dadurch gekennzeichnet, dass**
der aufgeschmolzene Oberflächenbereich sich in Richtung der Dicke des Strömungskanalsegments über weniger oder gleich 20 % der Dicke des Strömungskanalsegments (2), insbesondere weniger oder gleich 10 %, vorzugsweise weniger oder gleich 5 % der Dicke des Strömungskanalsegments erstreckt.

9. Verfahren nach einem der vorhergehenden Ansprüche,
**dadurch gekennzeichnet, dass**
der aufgeschmolzene Oberflächenbereich sich in Richtung der Dicke des Strömungskanalsegments (2) über mindestens 1 % der Dicke des Strömungskanalsegments, insbesondere mindestens 5 %, vorzugsweise mindestens 10 % der Dicke des Strömungskanalsegments erstreckt.

10. Verfahren nach einem der vorhergehenden Ansprüche,
**dadurch gekennzeichnet, dass**
der Randbereich (8) sich in Dickenrichtung über 1 bis 20 % des aufgeschmolzenen Oberflächenbereichs, insbesondere 5 bis 10 % des aufgeschmolzenen Oberflächenbereichs erstreckt.

11. Verfahren nach einem der vorhergehenden Ansprüche,
**dadurch gekennzeichnet, dass**
der Randbereich (8) mechanisch und/oder chemisch entfernt wird.

12. Verfahren nach einem der vorhergehenden Ansprüche,
**dadurch gekennzeichnet, dass**
von dem Strömungskanalsegment (2) vor dem Bereitstellen oder vor oder während des Reinigens eine Beschichtung auf der Begrenzungsfläche (3) entfernt wird.

13. Verfahren nach einem der vorhergehenden Ansprüche,
**dadurch gekennzeichnet, dass**
eine Mindestdicke des Strömungskanalsegments (2) bestimmt wird, wobei die Reparatur solange, insbesondere mehrmals innerhalb einer Lebensdauer des Strömungskanalsegments durchgeführt wird, bis die Dicke des Strömungskanalsegments nach Entfernen des Randbereichs die Mindestdicke unterschreitet.

## Claims

1. A method for the reparation of flow channel segments of a flow machine, in particular an aircraft engine, which comprises the following steps:
a. providing a single crystal flow channel segment or directionally solidified flow channel segment (2), which has a length, a width and a thickness, wherein the length and the width extend along the flow channel and are both larger than the thickness, and wherein the width and the length delimit a surface, which represents a delimiting surface (3) of a flow channel and has damage caused by operation,
b. cleaning the delimiting surface (3) in order to remove contaminants,
**characterized in that** the method also comprises the following steps:
c. remelting at least a part of the delimiting surface (3) within a surface region in such a way that molten material epitaxially solidifies in an inner region (7), which is directed towards the unmolten material, and forms a structural region (7), in which the single crystal structure or directionally solidified structure is maintained, and that molten material polycrystalline solidifies in an outer region (8), which is directed towards the flow channel and which forms an edge region,
d. removing the case region (8).

2. The method of claim 1,
**characterized in that**
a thermal treatment of the flow channel segment (2), for setting the microstructure, takes place between steps c) and d).

3. The method of claim 1 or 2,
**characterized in that**
the method comprises an examination step (22) for detecting the damage.

4. The method of claim 3,
**characterized in that**
a dye penetrant inspection is performed in the examination step (22).

5. The method of any of the preceding claims,
**characterized in that**
the cleaning (21) of the surface comprises at least one method selected from the group comprising thermal cleaning, mechanical cleaning, chemical cleaning, purging with a liquid or a gas flow, cleaning with fluoride ions and combinations thereof.

6. The method of any of the preceding claims,
**characterized in that**
a predominant part of the delimiting surface (3), in particular more than 60% of the delimiting surface, preferably more than 75% of the delimiting surface, most preferably more than 90% of the delimiting surface is remelted.

7. The method of any of the preceding claims,
**characterized in that**
the remelting is performed with a high-energy beam, in particular a laser beam, which is moved, with the beam surface (10) thereof hitting the part (9) of the delimiting surface (3) to be melted, relative to the part of the delimiting surface to be melted, wherein a motion pattern (11) of the beam surface, which is thus obtained, comprises a continuous meandering motion, a repeated parallel linear motion in the same direction or in an opposed, in particular alternately opposed direction, or a helical motion.

8. The method of any of the preceding claims,
**characterized in that**
the molten surface region extends in the direction of the thickness of the flow channel segment over 20% or less of the thickness of the flow channel segment (2), in particular 10% or less, preferably 5% or less of the thickness of the flow channel segment.

9. The method of any of the preceding claims,
**characterized in that**
the molten surface region extends in the direction of the thickness of the flow channel segment (2) over at least 1% of the thickness of the flow channel segment, in particular at least 5%, preferably at least 10% of the thickness of the flow channel segment.

10. The method of any of the preceding claims,
**characterized in that**
the edge region (8) extends in the thickness direction over 1 to 20% of the molten surface region, in particular 5 to 10% of the molten surface region.

11. The method of any of the preceding claims,
**characterized in that**
the edge region (8) is mechanically and/or chemically removed.

12. The method of any of the preceding claims,
**characterized in that**
a coating on the delimiting surface (3) is removed from the flow channel segment (2) before the provision or before or during the cleaning.

13. The method of any of the preceding claims,
**characterized in that**
a minimum thickness of the flow channel segment (2) is determined, wherein the reparation is performed, in particular multiple times within a lifetime of the flow channel segment, until the thickness of the flow channel segment after removing the edge region drops below the minimum thickness.

## Revendications

1. Procédé de réparation de segments de conduit d'écoulement d'une turbomachine, notamment d'un moteur d'aéronef, le procédé comprenant les étapes suivantes visant à :
a. produire un segment de conduit d'écoulement monocristallin ou à solidification directionnelle (2) ayant une longueur, une largeur et une épaisseur, la longueur et la largeur s'étendant le long du conduit d'écoulement et étant chacune supérieure à l'épaisseur, la largeur et la longueur définissant une surface qui représente une surface limite (3) d'un conduit d'écoulement et présentant des endommagements dus au fonctionnement,
b. nettoyer la surface limite (3) pour éliminer les contaminants,
**caractérisé en ce que** le procédé comprend en outre les étapes suivantes visant à :
c. refondre au moins une partie de la surface limite (3) dans une région de surface de telle sorte que la matière fondue se solidifie par épitaxie dans une région intérieure (7) dirigée vers le matériau non fondu et forme une région de structure (7) dans laquelle la structure monocristalline ou à solidification directionnelle reste maintenue, **en ce que** le matériau fondu se solidifie de manière polycristalline dans une région extérieure (8), qui est dirigée vers le conduit d'écoulement et qui forme une région de bord,
d. retirer la région de bord (8).

2. Procédé selon la revendication 1,
**caractérisé en ce que**
un traitement thermique du segment de conduit d'écoulement (2) est effectué entre les étapes de procédé c) et d) pour ajuster la structure.

3. Procédé selon la revendication 1 ou 2,
**caractérisé en ce que**
le procédé comprend une étape d'analyse (22) destinée à détecter les endommagements.

4. Procédé selon la revendication 3,
**caractérisé en ce que**
un test de pénétration de colorant est effectué à l'étape d' analyse (22).

5. Procédé selon l'une des revendications précédentes,
**caractérisé en ce que**
le nettoyage (21) de la surface comprend au moins un procédé du groupe comportant le nettoyage thermique, le nettoyage mécanique, le nettoyage chimique, le rinçage avec un liquide ou un flux gazeux, le nettoyage à ions fluorure et leurs combinaisons.

6. Procédé selon l'une des revendications précédentes,
**caractérisé en ce que**
la majeure partie de la surface limite (3), en particulier plus de 60 % de la surface limite, de préférence plus de 75 % de la surface limite, le plus préférablement plus de 90 % de la surface limite, est refondue.

7. Procédé selon l'une des revendications précédentes,
**caractérisé en ce que**
la refonte est effectuée avec un faisceau de haute énergie, en particulier un faisceau laser, dont la surface de faisceau (10) incidente à la partie à fondre (9) de la surface limite (3) est déplacée par rapport à la partie à fondre de la surface limite, un modèle de déplacement ainsi généré (11) de la surface de faisceau comportant un mouvement sinueux continu, un mouvement linéaire parallèle répété dans la même direction ou dans une direction opposée, en particulier alternativement, ou un mouvement hélicoïdal.

8. Procédé selon l'une des revendications précédentes,
**caractérisé en ce que**
la région de surface fondue s'étend dans le sens de l'épaisseur du segment de conduit d'écoulement sur 20 % ou moins de l'épaisseur du segment de conduit d'écoulement (2), en particulier sur 10 % ou moins, de préférence sur 5 % ou moins de l'épaisseur du segment de conduit d'écoulement.

9. Procédé selon l'une des revendications précédentes,
**caractérisé en ce que**
la région de surface fondue s'étend dans le sens de l'épaisseur du segment de conduit d'écoulement (2) sur au moins 1 % de l'épaisseur du segment de conduit d'écoulement, en particulier sur au moins 5 %, de préférence au moins 10 % de l'épaisseur du segment de conduit d'écoulement.

10. Procédé selon l'une des revendications précédentes,
**caractérisé en ce que**
la région de bord (8) s'étend dans le sens de l'épaisseur sur 1 à 20 % de la région de surface fondue, en particulier sur 5 à 10 % de la région de surface fondue.

11. Procédé selon l'une des revendications précédentes,
**caractérisé en ce que**
la région de bord (8) est éliminée par des moyens mécaniques et/ou chimiques.

12. Procédé selon l'une des revendications précédentes,
**caractérisé en ce que**
un revêtement sur la surface limite (3) est retiré du segment de conduit d'écoulement (2) avant la production ou avant ou pendant le nettoyage.

13. Procédé selon l'une des revendications précédentes,
**caractérisé en ce que**
l'on détermine une épaisseur minimale du segment de conduit d'écoulement (2), la réparation étant effectuée, en particulier plusieurs fois au cours de la vie du segment de conduit d'écoulement, jusqu'à ce que l'épaisseur du segment de conduit d'écoulement après le retrait de la région de bord soit inférieure à l'épaisseur minimale.
